# EUROPEAN PATENT SPECIFICATION

(11) **EP 1 066 191 B1**
(45) Date of publication and mention of the grant of the patent: **05.06.2002**
(21) Application number: 98913939.9
(22) Date of filing: 30.03.1998
(51) Int. Cl.: B62D 31/00, B60B 35/10, B62D 49/06

(54) **VARIABLE TRACK VEHICLE**
FAHRZEUG MIT VARIABLER SPURWEITE
VEHICULE A SYSTEME D'ESSIEUX VARIABLE

(43) Date of publication of application: 10.01.2001
(73) Proprietor: Gee, David Howard, Redditch, Worcs. B98 9AZ (GB)
(72) Inventor: Gee, David Howard, Redditch, Worcs. B98 9AZ (GB)
(74) Representative: Lally, William
(86) International application number: GB9800947
(87) International publication number: WO9950128

(56) References cited:
- WO-A-89/03336
- CA-A- 1 143 763
- DE-A- 2 018 070
- DE-C- 907 838
- FR-A- 1 442 426
- GB-A- 2 317 862
- JP-A- 61 226 301
- US-A- 2 536 749
- US-A- 5 697 464

## Description

### Description of Invention

This invention relates to motor vehicles.

The invention has been devised with the object in view of providing a motor vehicle for transport of one or a small number of persons, which is able to occupy a minimum amount of road space whilst overcoming certain disadvantages, as pointed out hereafter, which have been associated with vehicles for such purposes as generally known hitherto.

Two-wheeled motor vehicles, i.e. motorcycles, are highly maneuverable and occupy little road space, particularly in respect of their widths. They can be ridden through narrow gaps in traffic and require little room for parking. However, they require a high level of riding skill if they are to be ridden safely, require to be supported by the rider's legs or by stabilising devices when stationary or traveling extremely slowly, cannot be ridden in reverse, and can become uncontrollable if even one of the wheels should lose grip with the road surface. For safety reasons and for protection from the weather, the rider should wear protective clothing which is inconvenient and time consuming to put on and take off. Fully enclosed motorcycles have been proposed but are large, heavy, and require special measures to overcome the stability problem.

Conventional four-wheel vehicles, i.e. motor cars, overcome the safety and weather protection disadvantages of motorcycles but, because of their width, cannot be driven through narrow gaps in heavy traffic and require considerable space for parking. Most cars are unnecessarily large, heavy and fuel consuming for journeys which involve carrying only one or two persons.

There have been three-wheeled cars but, if they are to be stable when cornering, they require dimensions particularly in respect of their width which are comparable with, or even greater than, those of four-wheeled cars and therefore offer no advantage in respect of the road space they occupy.

There have been proposals for vehicles with three or more wheels which are much narrower than conventional motor cars. For stability, arrangements have been proposed which enable a part of the vehicle to tilt laterally when cornering, so that the centre of gravity of the vehicle is displaced relative to the positions at which the wheels of the vehicle contact the ground. Such tilting, in the manner of the leaning of a motorcycle when cornering, towards the centre of the turning circle of the vehicle, enables a comparatively narrow vehicle to corner in safety at a much higher speed than would otherwise be possible. One example of such a vehicle is disclosed in EP-0020835-B, of Jephcott but a disadvantage of it is the necessity of providing a powered tilting mechanism. Another such vehicle was disclosed in UK-9408066.0, of Gee (but not pursued). This avoids the need for a powered tilting mechanism but depends on the strength and skill of the rider, thereby reducing its advantage as compared with a motorcycle.

An alternative approach to the problem of stability when cornering, at more than a very low speed, is to provide a mechanism for increasing the track dimension of either, or both, front or rear wheels. Some agricultural tractors or mechanical handling vehicles have adjustable track widths but of a kind that can only be adjusted when they are stationary. Lanz, in DE-C-907838 appears to provide such a solution to the problem. Kubota, in JP-A-61226301, provides a more sophisticated mechanism intended to allow the track of an agricultural tractor to be varied while maintaining control of the steering. However, it does this in such a way that the steering angle and lateral displacement of the wheels are inter-dependent and, in practice, one or other is likely to be severely restricted. Jost, in DE-A-201 8070, shows an agricultural vehicle in which both track and wheelbase can be altered, apparently while the vehicle is in motion, but the wheels concerned do not appear to be steerable.

In order to combine the advantages of compactness when stationary or traveling very slowly with stability at the higher speeds associated with passenger road vehicles, a mechanism is required to vary track width whilst the vehicle is in motion but without the restrictions inherent in such designs. Moreover, as a very compact four-wheeled vehicle would have too short a wheelbase for satisfactory stability and comfort when traveling at higher speeds on uneven surfaces, it is also desirable to provide a means for lengthening the wheelbase at higher speeds. The mechanism or mechanisms to provide these adjustments must be simple to operate and reliable in use. The driver should preferably also be able to see the configuration of the relevant wheels at any time.

With these desiderata in view, according to one aspect of the present invention, I provide a motor vehicle comprising:
a chassis structure;
at least three ground-engaging wheels including at least one pair of wheels spaced from one another laterally of the vehicle;
means for mounting a prime mover and a transmission on the chassis structure providing for driving of at least one of the road wheels;
a body structure for accommodating at least one user of the vehicle and mounted on or integral with the chassis structure;
said at least one pair of laterally spaced wheels being connected to the chassis structure by elements pivotally connected together in respective generally parallelogram configurations, said generally parallelogram configurations of elements providing for movement of the wheels of the pair laterally and lengthwise of the vehicle in co-ordination with one another; said parallelogram configurations of elements providing for movement of the wheels of said pair between a retracted position in which the lateral spacing between the wheels is at a minimum, an extended position in which the lateral spacing between the wheels is at a maximum and a range of positions between the retracted and extended positions, and further positions beyond the extended position in which the lengthwise displacement of the wheels from the retracted position is further increased but the lateral displacement from the extended position is reduced, thereby enabling the vehicle to have a narrow track and short wheelbase, or a wider track and longer, but less than maximum, wheelbase or a track between the minimum and maximum width in conjunction with a wheelbase which is longer than when the track is at its maximum width;
user-actuable means for causing said movement of the wheels to be
effected; characterised by:
   said parallelogram configurations including outer longitudinally-disposed elements to which said wheels of the pair are connected with suspension means providing for upwards and downwards movement of the wheels relative to said outer elements;
   means for locking the parallelogram configurations in at least one position within their range of displacement;
   means for steering at least said pair of road wheels independently of said lateral and lengthwise displacement of said outer longitudinal elements while lateral and lengthwise displacement is being effected and the steering ratio being substantially independent of the lengthwise and lateral displacement of the wheels.

Preferably the vehicle is a four-wheeled vehicle, with a pair of front wheels and a pair of rear wheels.

Preferably the mechanism providing lengthwise and lateral movement applies to the front wheels and, if so, preferably these wheels are not driven. Such mechanism may also apply to the rear wheels which may also be driven by means of an electric or hydraulic motor at each wheel or such other means as may be devised.

Preferably, a mechanism, which may comprise meshing gears, sprockets and chains, further pivotally connected elements, or some combination of these, which ensures that the amount of lateral and lengthwise movement of each wheel, being one of a lateral pair, is substantially the same.

Preferably, a speed-sensitive mechanism for locking the parallelogram linkages in the extended position so that the linkages cannot be retracted inadvertently (whether by the driver or by unequal cornering or braking forces on the two wheels concerned) while the vehicle is traveling a speed above that at which retraction would be safe.

Preferably, if lengthwise and lateral movement applies to the front wheels, the chassis structure of the vehicle includes a steering mechanism such that the steering ratio is substantially independent of whether the front wheels are in the retracted position, extended position or any intermediate position or any position beyond the extended position. Such steering mechanism may comprise meshing gears, sprockets and chains, further pivotally connected elements, or some combination of these.

It is to be understood that when I refer to the chassis structure comprising elements in parallelogram configuration, in practice the arrangement may differ from a true parallelogram. This allows the designer to provide different degrees of toe-in or toe-out in the retracted and extended positions, if desired. Similarly, the steering mechanism may allow some small variation in steering ratio between the retracted and extended positions in order to allow the Ackermann angle to vary, if desired.

Steering of the vehicle may be by means of a handle bar or steering wheel disposed within the body structure of the vehicle so as able to be held by the driver.

Control of lengthwise and lateral movement of the relevant elements of the chassis may be effected by various means: for example, of a foot-operated lever such that when the driver pushes with his or her right foot the mechanism extends and when he or she pushes with the left foot it retracts. It is envisaged that this mechanism will be activated when the vehicle is traveling at about 15 kph: at such speed the driver should be able to exert the force needed to induce about 1 cm of lateral movement of the tyres relative to the road surface for each revolution of the road wheels. Nevertheless, electrical or hydraulic power assistance may be provided which would also have the advantage that the control could be a relatively small switch or lever which may be operated by the driver's fingers without removing his or her hand entirely from the handle bar or steering wheel. It would be within the scope of the invention if the vehicle were to be provided with powered, automatic operation to extend the mechanism as the vehicle speed rises above a pre-set level and to retract it as the vehicle speed falls below such level, although some manual over-ride would still be desirable to prevent extension or retraction in certain road or traffic conditions.

The invention will now be described by way of example with reference to the accompanying drawings, of which:
Figure 1 is a diagrammatic plan view showing the main elements of the chassis structure and arrangement of movable elements of a vehicle according to the present invention, in the "extended" condition;
Figure 2 is a view as Figure 1, in the "retracted" condition;
Figure 3 is a diagrammatic side view of the same elements of the vehicle as are shown in Figures 1 and 2, in the "extended" condition;
Figure 4 is a diagrammatic side view of the same elements of the vehicle as are shown in Figures 1 and 2, in the "retracted" condition;
Figure 5 is a diagrammatic front view of the same elements of the vehicle as are shown in Figures 1 and 2, in the "extended" condition (but omitting members 3 to 8 inclusive);
Figure 6 is a diagrammatic front view of the same elements of the vehicle as are shown in Figures 1 and 2, in the "retracted" condition (but omitting members 3 to 8 inclusive);
Figure 7 is a side view of a vehicle, according to the invention, in the "extended" condition, including (shown dotted) certain components not visible from outside the vehicle;
Figure 8 is a side view of the vehicle shown in Figure 7, in the "retracted" condition;
Figure 9 is a plan view of the vehicle shown in Figure 7: for convenience in showing the two extreme conditions, the left side is shown "retracted" and the right "extended" (even though such a combination would not exist in practice); and certain components not visible from outside the vehicle are shown dotted.

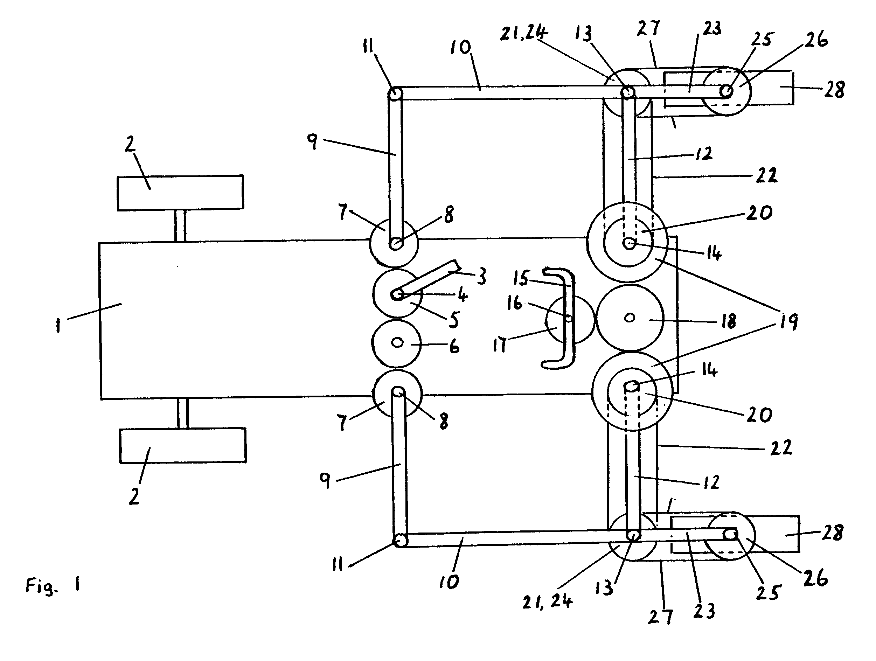

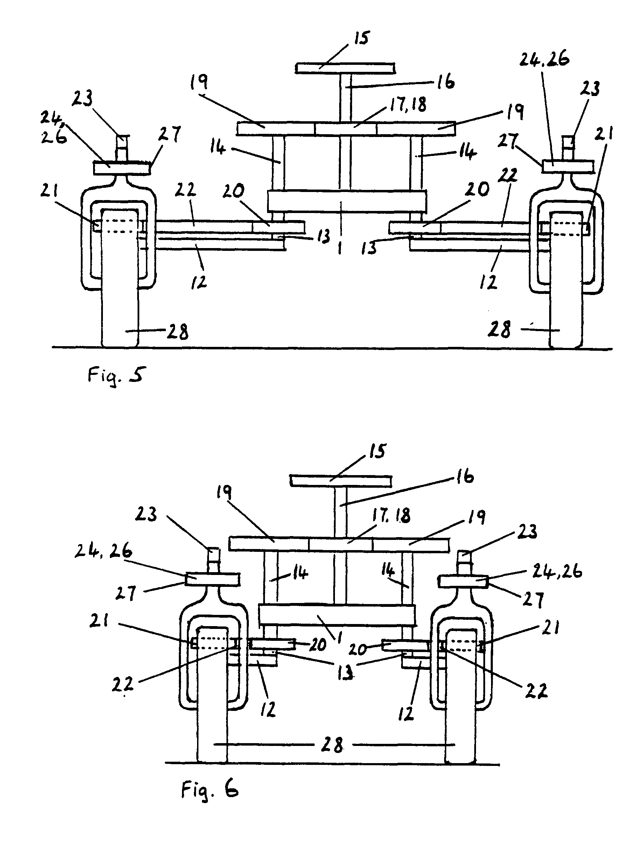

Referring firstly to Figures 1 to 6 of the drawings, these show diagrammatically a possible arrangement of components constituting the chassis structure of a vehicle according to the invention. Some components are shown as straight lines oriented and connected to one another as described hereafter, but it is to be appreciated that in a real vehicle such components will be constructed and arranged generally in accordance with current or future automotive practice. The vehicle shown incorporates lengthwise and lateral movement and the associated steering mechanism as for the front wheels of a vehicle according to the invention. If the rear wheels are also required to move laterally and lengthwise, a mirror image of components 11 to 14, about the axis formed by components 8, would be linked to the rear wheels 2: it would be connected to lever 3 by a similar combination of gear wheels to components 5 to 7 but arranged so that gear wheels corresponding to wheels 7 rotate in the opposite direction causing the rear wheels 2 move rearwards as they move outwards. The words "vertical" and "horizontal", as used in the following description, are to be understood to include such approximations to these orientations as may occur when the vehicle is in motion.

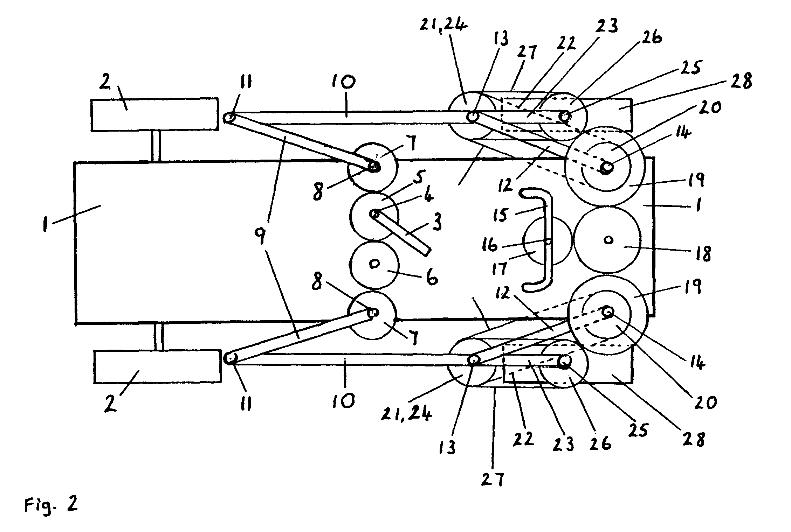

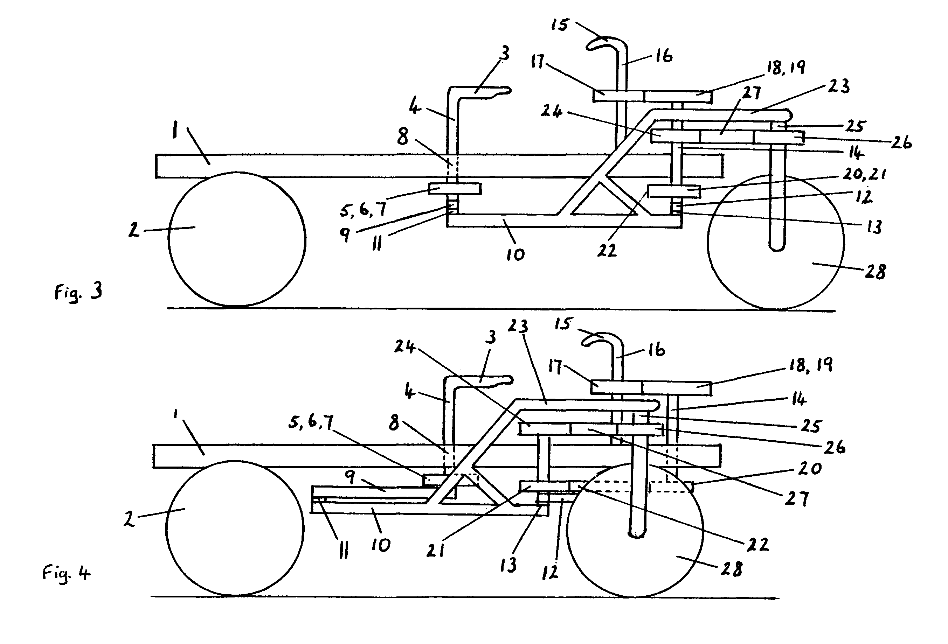

The chassis structure of the vehicle comprises, firstly, a rigid platform 1 which is generally of rectangular configuration in plan view. In practice, as above referred to in accordance with current or future automotive practice, the platform 1 would probably be constructed as a one (or more)-piece metal pressing or fabrication, or moulded component of fibre-reinforced plastics, carbon fibre or other suitable material, and possibly integral with the vehicle body. At the rear end of the platform 1, having regard to the normal direction of travel of the vehicle in use, there is a pair of rear wheels 2 with appropriate drive mechanism and suspension (not shown). Towards the middle of the platform 1, a hand- or foot-operated lever 3 is rigidly connected to a vertical shaft 4 which passes through a bearing in the platform 1 to a toothed gear wheel 5 which is rigidly connected to the shaft 4. In practice, shaft 4 might be turned by an electric motor or hydraulic pressure, or a further mechanism could be arranged to bring a lever to a convenient position for the driver. The gear wheel 5 is in constant mesh with an idler gear wheel 6, rigidly connected to a vertical shaft supported by a bearing in platform 1. The gear wheel 6 is in constant mesh with a further gear wheel 7 rigidly connected to a vertical shaft 8 near the right side of the platform 1 (as seen by a driver facing forwards) and supported by a bearing in the platform 1. An identical gear wheel 7, rigidly connected to a vertical shaft 8 near the left side of platform 1, is in constant mesh with the gear wheel 5. For clarity, some components are shown in Figures 1 and 2 as if they were above the platform 1 although, in Figures 3 to 6, they are shown below platform 1. A rigid horizontal member 9 is rigidly connected to each wheel 7. A rigid member 10 is pivotally connected to each member 9 at joints 11. Each member 10 is pivotally connected to a rigid horizontal member 12 by means of a vertical shaft 13 around which members 10 and 12 may turn. The other end of each member 12 is pivotally connected to a vertical shaft 14 supported by a bearing in the platform 1. The bearings supporting the shafts 8, 13 and 14 and the joints 11 allow movement between the members 1, 9, 10 and 12 in the horizontally-oriented plane in which the members 1, 9, 10 and 12 lie, but in no other direction. Thus, at each side of the vehicle, the platform 1 and members 9, 10 and 12 comprise a parallelogram linkage such that, as lever 3 is moved in an anti-clockwise direction (as seen from above), the members 10 move laterally away from the platform 1 and forward relative to the platform 1. In practice, at each side of the vehicle, the bearings supporting the shafts 8, 13 and 14, the members 9, 10 and 12 and the joint ii may be duplicated to form a second parallelogram linkage operating in a different horizontal plane (directly above or below that shown) in order to counteract the bending moments in the linkage when the mechanism is in the extended position.

At the front of the vehicle, handlebars (or a steering wheel) 15 are rigidly attached to a vertical shaft 16 supported by a bearing in platform 1. In practice, the shaft 16 may incorporate a universal joint so that the part of the shaft below the joint is vertical but the part above the joint is supported by a bearing in a position arranged to enable the handlebars (or steering wheel) 15 to be aligned conveniently for the driver. A gear wheel 17 is rigidly connected to shaft 16. The gear wheel 17 is in constant mesh with an idler gear wheel 18 which is rigidly connected to a vertical shaft supported by a bearing in platform 1. The relative radii of the gear wheels 17 and 18 will be chosen to provide the desired steering ratio. Further gear wheels 19 are rigidly attached to the shafts 14 and are both in constant mesh with the gear wheel 18. Sprocket wheels 20 are rigidly connected to the shafts 14. Further sprocket wheels 21 are rigidly connected to the shafts 13. At each side of the vehicle, sprocket wheel 20 is connected to sprocket wheel 21 by means of a chain 22. At each side of the vehicle, a member 23 is rigidly connected to member 10 so as to provide a forward extension of member 10 but in a higher horizontal plane. Each member 23, and the corresponding member 10, form a rigid structure in a vertically-oriented plane. Further sprocket wheels 24 are rigidly attached to the shafts 13. At each side of the vehicle, a vertical shaft 25 is supported by a bearing near the front of member 23. Sprocket wheels 26 are rigidly connected to the shafts 25. At each side of the vehicle, sprocket wheel 24 is connected to sprocket wheel 26 by means of a chain 27. Front road wheels 28 are connected, with suitable suspension (not shown), to the shafts 25 in such a way that they turn about the axes of shafts 25 as shafts 25 turn: the suspension and connections may be as normally found in the front forks of a motor cycle but other arrangements are possible. The effect of the arrangement of members 16 to 27 inclusive is that, when the handlebars (or steering wheel) 16 are turned, the road wheels 28 turn in the same direction and with a steering ratio that remains substantially constant irrespective of whether the parallelograms formed by members 1, 9, 10 and 12 are in the extended or retracted position or any intermediate position.

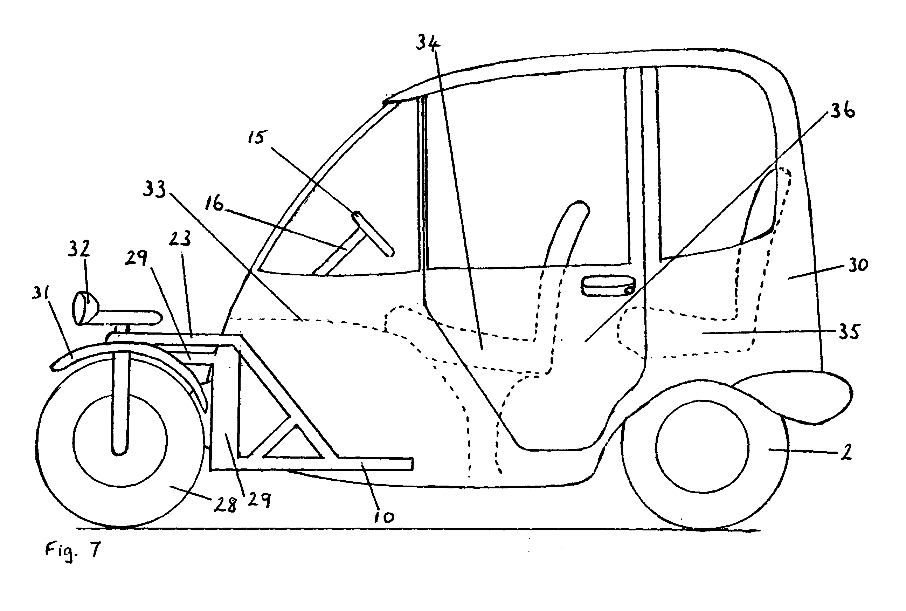

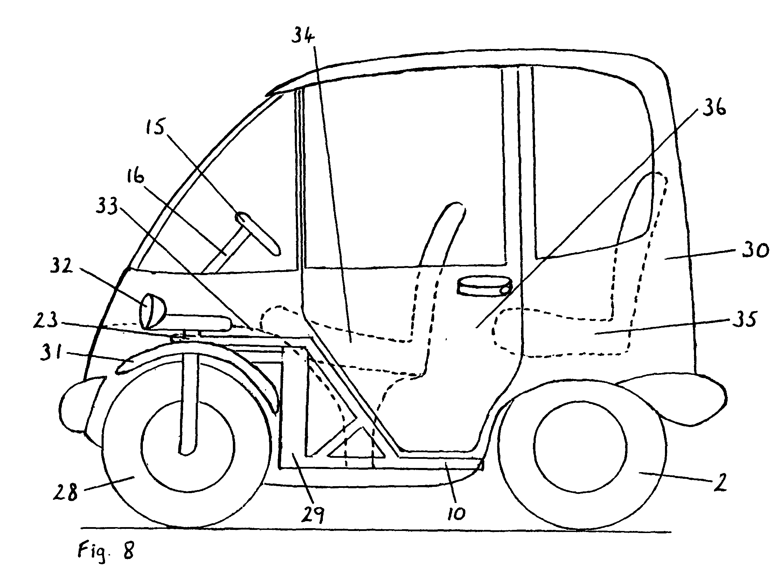

Referring to figures 7 and 8, the sprocket wheels 21, 24 and 25 and the chains 27 are (mainly) enclosed within housings 29.

Referring to figures 7, 8 and 9, the main external panels and windows of a saloon-type vehicle body 30 are shown. Cycle-type mudguards 31 and driving lamps 32 are connected to the supports for the front wheels 28. The engine and gearbox are covered by a cover 33. A seat 34 for the driver and a second seat 35, which could be for one adult or two children, are provided. A door 36 is provided on one side of the vehicle: there is no similar door on the other side where exit through the window would be possible in an emergency. When in the retracted condition, the front wheels 28 may be steered within the limits of the inner wheel arches 37.

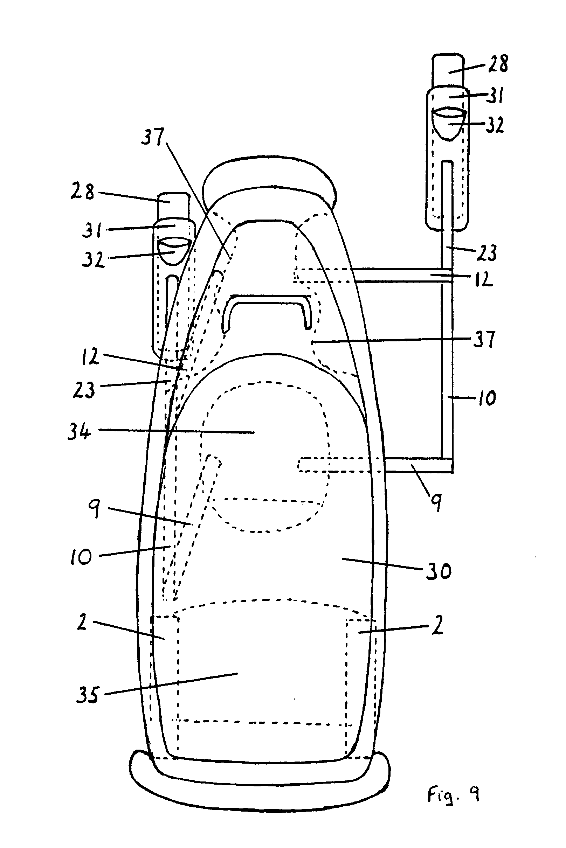

From Figure 9 it will be appreciated that, in the "retracted" condition, the vehicle is of relatively narrow width and length compared with conventional cars, and thus occupies a minimum of road space.

## Claims

1. A motor vehicle comprising:
a chassis structure (1);
at least three ground-engaging wheels (2, 28) including at least one pair of wheels (28) spaced from one another laterally of the vehicle;
means for mounting a prime mover and a transmission on the chassis structure providing for driving of at least one of the road wheels;
a body structure (30) for accommodating at least one user of the vehicle and mounted on or integral with the chassis structure;
said at least one pair of laterally spaced wheels (28) being connected to the chassis structure by elements (9, 10, 12) pivotally connected together in respective generally parallelogram configurations, said generally parallelogram configurations of elements providing for movement of the wheels (28) of the pair laterally and lengthwise of the vehicle in co-ordination with one another; said parallelogram configurations of elements providing for movement of the wheels of said pair between a retracted position in which the lateral spacing between the wheels is at a minimum, an extended position in which the lateral spacing between the wheels is at a maximum and a range of positions between the retracted and extended positions, and further positions beyond the extended position in which the lengthwise displacement of the wheels from the retracted position is further increased but the lateral displacement from the extended position is reduced, thereby enabling the vehicle to have a narrow track and short wheelbase, or a wider track and longer, but less than maximum, wheelbase or a track between the minimum and maximum width in conjunction with a wheelbase which is longer than when the track is at its maximum width;
and user-actuable means (15) for causing said movement of the wheels (28) to be effected; **characterised by**:
said parallelogram configurations including outer longitudinally-disposed elements (10) to which said wheels (28) of the pair are connected with suspension means providing for upwards and downwards movement of the wheels relative to said outer elements;
means for locking the parallelogram configurations in at least one position within their range of displacement; and
means (16-27) for steering at least said pair of road wheels independently of said lateral and lengthwise displacement of said outer longitudinal elements while lateral and lengthwise displacement is being effected and the steering ratio being substantially independent of the lengthwise and lateral displacement of the wheels.

2. A motor vehicle as claimed in Claim 1, further **characterised in that** the angle at one of the vertices of each parallelogram is controlled by intermeshing gears (5-7), one of which is provided with a means (3, 4) of user actuation.

3. A motor vehicle as claimed in Claim 1, further **characterised in that** the angle at one of the vertices of each parallelogram is controlled by a combination of intermeshing gears, or sprocket wheels and chains, or further pivotally connected elements, one of which is provided with a means of user actuation.

4. A motor vehicle as claimed in Claim 1, further **characterised in that** the user actuated steering control means (15) is connected to the displaceable road wheels by intermeshing gears, or sprocket wheels and chains, or further pivotally connected elements (16-27), or a combination thereof.

5. A motor vehicle as claimed in Claim 1, further **characterised in that** means are provided for preventing actuation of the displacement mechanism while the vehicle is traveling at more than a pre-determined speed.

6. A motor vehicle as claimed in Claim 1 or Claim 5, further **characterised in that** means are provided for automatic actuation to increase the displacement of the displaceable wheels when the vehicle speed increases above a pre-determined level and to reduce the displacement when the vehicle speed decreases below a pre-determined level.

7. A motor vehicle as claimed in Claim 6, further **characterised in that** means are provided to enable the user to over-ride the automatic actuation of the displacement of the displaceable road wheels.

8. A motor vehicle as claimed in any one of the preceding claims further **characterised in that** the means for effecting the road wheel displacement include a power- operated or power-assisted mechanism actuated by the user.

9. A motor vehicle as claimed in any one of the preceding claims further **characterised in that** at said least one pair of laterally spaced wheels is visible to the user irrespective of the extent of displacement.

## Patentansprüche

1. Motorfahrzeug, mit:
einer Fahrgestellstruktur (1);
mindestens drei mit dem Boden in Eingriff stehenden Rädern (2, 28), wobei zumindest ein Paar von Rädern (28) vorhanden ist, die seitlich bzw. in Querrichtung des Fahrzeugs voneinander beabstandet sind;
Mitteln zur Anbringung eines Primärantriebs und eines Getriebes auf der Fahrgestellstruktur, die einen Antrieb von zumindest einem der Straßenräder bereitstellt;
einer Aufbaustruktur (30) zum Aufnehmen von zumindest einem Benutzer des Fahrzeugs, die auf der Fahrgestellstruktur angebracht oder integral damit ausgebildet ist;
wobei das genannte, wenigstens eine Paar von in Querrichtung beabstandeten Rädern (28) mit der Fahrgestellstruktur durch Elemente (9, 10, 12) verbunden ist, die schwenkbar in jeweiligen, im wesentlichen parallelogrammartigen Konfigurationen miteinander verbunden sind, wobei die im wesentlichen parallelogrammartigen Konfigurationen von Elementen eine Bewegung der Räder (28) des Paars in Querrichtung und Längsrichtung des Fahrzeugs in Koordination miteinander ermöglichen; wobei die Parallelogrammanordnungen von Elementen eine Bewegung der Räder des genannten Paars zwischen einer zurückgezogenen Position, in der der seitliche bzw. Querabstand zwischen den Rädern ein Minimum ist, einer ausgefahrenen Position, in der der seitliche bzw. Querabstand zwischen den Rädern ein Maximum ist, und einem Bereich von Positionen zwischen der eingezogenen und der ausgefahrenen Position, und weiteren Positionen über die ausgefahrene Position hinaus ermöglicht, in denen die Verlagerungen der Räder in Längsrichtung ausgehend von der zurückgezogenen Position weiter vergrößert ist, aber die seitliche bzw. Querverlagerung ausgehend von der ausgefahrenen Position reduziert ist, wodurch es möglich ist, daß das Fahrzeug eine schmale Spurweite und einen kurzen Radstand oder eine größere Spurweite und einen längeren Radstand, der aber geringer als ein Maximalwert ist, aufweist, oder eine Spurweite zwischen der minimalen und maximalen Spurweite in Verbindung mit einem Radstand, der länger ist als dann, wenn die Spurweite auf ihrem maximalen Wert ist;
und mit von einem Benutzer betätigbaren Mitteln (15), um zu veranlassen, daß die genannte Bewegung der Räder (28) ausgeführt wird, **dadurch gekennzeichnet, daß**:
die genannten Parallelogrammanordnungen äußere, in Längsrichtung angeordnete Elemente (10) aufweisen, an denen die Räder (28) des Paars mit Aufhängemitteln verbunden sind, die für eine aufwärts und abwärts gerichtete Bewegung der Räder relativ zu den äußeren Elementen sorgen;
Mittel zum Blockieren der Parallelogrammanordnungen in zumindest einer Position innerhalb ihres Verlagerungsbereichs vorhanden sind; und
Mittel (16-27) zum Steuern von zumindest dem genannten Paar von Straßenrädern unabhängig von der genannten Quer- und Längsverlagerung der äußeren Längselemente, während eine Quer- und Längsverlagerung ausgeführt wird und das Lenkverhältnis im wesentlichen unabhängig von der Längs- und Querverlagerung der Räder ist, vorhandensind.

2. Motorfahrzeug nach Anspruch 1, **dadurch gekennzeichnet, daß** der Winkel an einem der Scheitel eines jeden Parallelogramms durch miteinander in Eingriff stehende Zahnräder (5-7) gesteuert wird, von denen eines mit einer Einrichtung (3, 4) zur Betätigung durch den Benutzer versehen ist.

3. Motorfahrzeug nach Anspruch 1, **dadurch gekennzeichnet, daß** der Winkel an einem der Scheitel eines jeden Parallelogramms durch eine Kombination von miteinander in Eingriff stehenden Zahnrädern, oder Ritzeln und Ketten, oder schwenkbar verbundenen Elementen, gesteuert wird, wobei eines davon mit einem Mittel zur Betätigung durch den Benutzer versehen ist.

4. Motorfahrzeug nach Anspruch 1, **dadurch gekennzeichnet, daß** die von einem Benutzer betätigte Lenkungskontrolleinrichtung (15) mit den verlagerbaren Straßenrädern durch miteinander in Eingriff stehende Zahnräder, oder durch Ritzel und Ketten, oder durch schwenkbar miteinander verbundene Elemente (16-27), oder durch eine Kombination davon verbunden ist.

5. Motorfahrzeug nach Anspruch 1, **dadurch gekennzeichnet, daß** Mittel vorgesehen sind, um eine Betätigung des Verlagerungsmechanismus zu verhindern, wenn das Fahrzeug mit einer höheren als eine vorbestimmte Geschwindigkeit fährt.

6. Motorfahrzeug nach Anspruch 1 oder 5, **dadurch gekennzeichnet, daß** Mittel zur automatischen Betätigung vorgesehen sind, um die Verlagerung der verlagerbaren Räder zu vergrößern, wenn die Geschwindigkeit des Fahrzeugs über einen vorbestimmten Wert steigt, und um die Verlagerung zu reduzieren, wenn die Geschwindigkeit des Fahrzeugs unter einen vorbestimmten Wert fällt.

7. Motorfahrzeug nach Anspruch 6, **dadurch gekennzeichnet, daß** Mittel vorgesehen sind, um den Benutzer in die Lage zu versetzen, die automatische Betätigung der Verlagerung der verlagerbaren Straßenräder zu übersteuern.

8. Motorfahrzeug nach einem der vorangehenden Ansprüche, **dadurch gekennzeichnet, daß** die Mittel zum Ausführen der Verlagerung der Straßenräder einen mit Antriebskraft betriebenen oder mit Antriebskraft unterstützten Mechanismus umfassen, der durch den Benutzer betätigt wird.

9. Motorfahrzeug nach einem der vorangehenden Ansprüche, **dadurch gekennzeichnet, daß** das zumindest eine Paar von in Querrichtung beabstandeten Rädern für den Benutzer sichtbar ist, unabhängig vom Ausmaß der Verlagerung.

## Revendications

1. Un véhicule automobile comprenant :
une structure de châssis (1) ;
au moins trois roues (2, 28) venant en contact avec le sol comprenant au moins une paire de roues (28) espacées l'une de l'autre dans la direction latérale du véhicule ;
des moyens pour monter un propulseur principal et une transmission sous la structure de châssis, devant assurer l'entraînement d'au moins l'une des roues du véhicule ;
une structure de carrosserie (30), pour recevoir au moins un utilisateur du véhicule et montée sur ou réalisée d'une seule pièce avec la structure de châssis ;
ladite au moins une paire de roues (28) espacées latéralement étant reliée à la structure de châssis par des éléments (9, 10, 12) reliés à pivotement ensemble en des configurations globalement en parallélogramme respectives, lesdites configurations globalement en parallélogramme des éléments produisant un déplacement des roues (28) de la paire en direction latérale et en direction de la longueur du véhicule, de façon mutuellement coordonnée, lesdites configurations en parallélogramme des éléments assurant le déplacement des roues de ladite paire entre une position rétractée, à laquelle l'espacement latéral entre les roues est minimal, une position déployée, à laquelle l'espacement latéral encre les roues est maxima,1 et une gamme de positions entre les positions rétractées et déployées et d'autres positions situées au-delà de la position déployée, dans lequel le déplacement dans la direction de la longueur des roues depuis la position rétractée est en outre augmenté, mais le déplacement latéral depuis la position déployée est réduit, permettant de cette manière au véhicule d'avoir une voie étroite et un empattement court, ou bien une voie plus large et un empattement long, mais inférieur à une valeur maximale, ou une voie située entre la largeur minimale et maximale en liaison avec un empattement supérieur à celui qu'on a lorsque la voie est à sa largeur maximale ;
et des moyens actionnables par l'utilisateur (15) pour effectuer ledit déplacement des roues (28) ; **caractérisé par le fait que** :
lesdites configurations en parallélogramme incluent des éléments extérieurs (10) disposés longitudinalement, auxquells lesdites roues (28) de la paire sont reliées à des moyens de suspension fournissant un déplacement vers le haut et vers le bas des roues par rapport auxdits éléments extérieurs ;
des moyens pour verrouiller les configurations en parallélogramme en au moins une position dans leur plage de déplacement ; et
des moyens (16 à 27) pour assurer la commande de pilotage directionnel d'au moins une paire de roues de roulage indépendamment dudit déplacement latéral et en longueur desdits éléments longitudinaux extérieurs, tandis que le déplacement latéral et dans la longueur est effectué, et le taux de braquage étant sensiblement indépendant du déplacement en longueur et latéral des roues.

2. Un véhicule automobile selon la revendication 1, **caractérisé en outre en ce que** l'angle à l'un des sommets de chaque parallélogramme est commandé par un engrènement de roues dentées (5 à 7) dont l'une est munie d'un moyen (3, 4) permettant l'actionnement par l'utilisateur.

3. Un véhicule automobile selon la revendication 1, **caractérisé en outre en ce que** l'angle sur l'un des sommets de chaque parallélogramme est commandé par une combinaison de roues dentées engrenées, ou de roues à chaîne et de chaînes, ou par d'autres éléments reliés à pivotement, dont l'un est muni d'un moyen pour être actionné par l'utilisateur.

4. Un véhicule automobile selon la revendication 1, **caractérisé en outre en ce que** des moyens de commande de pilotage directionnel (15), actionnés par l'utilisateur, sont reliés aux roues de roulage déplaçables par engrènement de roues dentées, ou de roues à chaîne et de chaînes, ou d'autres éléments reliés à pivotement (16 à 27), ou bien une combinaison de ceux-ci.

5. Un véhicule automobile selon la revendication 1, **caractérisé en outre en ce que** des moyens sont prévus pour empêcher l'actionnement du mécanisme de déplacement tandis que le véhicule se déplace à une vitesse supérieure à une vitesse prédéterminée.

6. Un véhicule automobile selon la revendication 1 ou la revendication 5, **caractérisé en outre en ce que** des moyens sont prévus pour obtenir un actionnement automatique, afin d'augmenter le déplacement des roues déplaçables lorsque la vitesse de véhicule augmente au-dessus d'un niveau prédéterminé et pour réduire le déplacement lorsque la vitesse de véhicule diminue au-dessous d'un niveau prédéterminé.

7. Un véhicule automobile selon la revendication 6, **caractérisé en outre en ce que** des moyens sont prévus pour permettre à l'utilisateur de forcer l'actionnement automatique du déplacement des roues de roulage déplaçables.

8. Un véhicule automobile selon l'une quelconque des revendications précédentes, **caractérisé en outre en ce que** les moyens pour effectuer le déplacement des roues de roulage comprennent un mécanisme actionné par fourniture d'une puissance ou assisté par fourniture d'une puissance, actionné par l'utilisateur.

9. Un véhicule automobile selon l'une quelconque des revendications précédentes, **caractérisé en outre en ce que** ladite au moyen une paire de roues espacées latéralement est visible à l'utilisateur, indépendamment de l'ampleur du déplacement.
